# DEMANDE DE BREVET EUROPEEN

(11) **EP 0 596 795 A1**
(43) Date de publication de la demande: **11.05.1994**
(21) Numéro de dépôt: 93402690.7
(22) Date de dépôt: 02.11.1993
(51) Int. Cl.: G21C 17/017, G01B 7/28

(54) **Dispositif d'inspection à distance des internes supérieurs d'un réacteur nucléaire**

(30) Priorité: 02.11.1992 US 970751
(71) Demandeur: B&W FUEL COMPANY, Lynchburg, VA 24506-0935 (US)
(72) Inventeur: Roseveare Ronald D., Evington- Virginia 24550 (US); Smentek, Thomas J., Forest- Virginia 24551 (US)
(74) Mandataire: Fort, Jacques

(57) **Abrégé**

Le dispositif est destiné à inspecter des internes supérieurs d'un réacteur nucléaire ayant une plaque support 40 présentant une ouverture centrale (42), plusieurs canaux radiaux et au moins une ouverture de crayon de commande communiquant avec chaque canal. Le dispositif comprend un boîtier support externe (100) permettant de déplacer vers le haut et vers le bas un corps de sonde (12), un support de sonde (10) porté par le corps de sonde (12), des moyens d'entrainement et un transducteur de profil (16). Des moyens d'entrainement de transducteur centrent le corps de sonde dans l'ouverture centrale. Les moyens d'entrainement en rotation sont commandables de façon à faire tourner le corps de sonde pour l'amener dans une orientation permettant de déplacer le transducteur radialement dans un des canaux radiaux. Les moyens d'entrainement (18) de transducteur déplacent radialement le transducteur le long du canal et vers une zone de communication entre le canal et une ouverture.

## Description

La présente invention concerne de façon générale l'inspection des réacteurs nucléaires et elle a plus particulièrement pour objet un dispositif destiné à inspecter les internes supérieurs, contenant les structures de guidage de grappes de commande, d'un réacteur nucléaire.

Les grappes de commande sont utilisées dans un réacteur nucléaire pour régler la réactivité du réacteur. Les internes supérieurs et les structures de guidage des grappes reçoivent les grappes et les guident lorsqu'elles sont soulevées à partir du coeur ou abaissées dans le coeur. La structure de guidage est généralement constituée par une plaque horizontale, ou plusieurs plaques placées au-dessus du coeur du réacteur. Les crayons de commande et les grappes sont reçus et guidés par une ouverture verticale au centre de chaque plaque et par des canaux radiaux.

L'araignée des grappes, de forme connue, traverse les canaux, en forme de fente, lorsque les crayons sont levés et baissés. Les canaux ménagés dans la plaque s'étendent radialement à partir de l'ouverture. Chaque canal présente au moins une portion découpée ayant une forme en C ou en tube fendu. Au cours du fonctionnement normal du réacteur, les grappes de crayons de commande sont hors du coeur. Dans cette position, un tronçon relativement court des crayons de commande se trouve dans le coeur. L'écoulement hydraulique de réfrigérant à travers les internes supérieurs fait vibrer les crayons de commande contre la plaque horizontale de la structure de guidage. Cette vibration provoque une usure des crayons de commande et de la plaque horizontale, surtout dans les portions découpées des canaux de la plaque. Une usure notable de la plaque de guidage peut avoir un effet défavorable sur le fonctionnement normal des crayons de commande. Il est en conséquence important de connaître le degré d'usure de la structure de guidage, car une commande correcte du réacteur dépend directement d'un déplacement correct des crayons de commande. On peut à ce sujet faire référence par exemple aux brevets US 4 728 488, 4 863 678 et 4 902 468.

L'inspection de la plaque pose des problèmes. Les canaux radiaux et l'ouverture centrale ont une forme complexe. La difficulté d'accès aux plaques, la contamination radioactive et les niveaux de radiation élevés, ainsi que la nécessité de mesures précises, interdisent une inspection visuelle à proximité immédiate.

La présente invention vise à apporter une solution simple aux problèmes ci-dessus. De façon plus précise, elle vise à fournir un dispositif permettant de relever le profil de la plaque support dans les internes supérieurs, notamment en des points d'interface avec les crayons de commande.

Pour cela et de façon générale, l'invention met en oeuvre un corps de sonde fixé à un boîtier support externe utilisé pour mettre en place le corps de sonde dans le sens axial, en vue d'inspecter la plaque support des internes supérieurs.

Plus précisément, l'invention propose un dispositif conforme à la revendication 1.

Le corps de sonde peut éventuellement être muni de membranes gonflables haute et basse destinées à centrer et à maintenir le corps de sonde par rapport à la plaque support des internes supérieurs.

D'autres caractéristiques encore de l'invention sont définies dans les revendications dépendantes.

Les caractéristiques ci-dessus ainsi que d'autres apparaitront mieux à la lecture de la description qui suit d'un mode particulier de réalisation, donné à titre d'exemple non-limitatif. La description se réfère aux dessins qui l'accompagnent, dans lesquels :
- la figure 1 est une vue en coupe longitudinale composite d'un dispositif conforme à l'invention ;
- la figure 2 est une vue de dessus d'une plaque support des internes supérieurs d'un réacteur nucléaire ;
- la figure 3 est une vue de dessus partielle d'une ouverture de crayon de commande et d'un canal de communication à inspecter ;
- la figure 4 est une vue en coupe longitudinale montrant l'ensemble du dispositif d'inspection, en place dans les internes supérieurs ;
- la figure 5 est une vue à grande échelle du transducteur, avec les bras d'inspection munis de jauges de contrainte ; et
- la figure 6 est un relevé de profil représentatif obtenu par l'inspection.

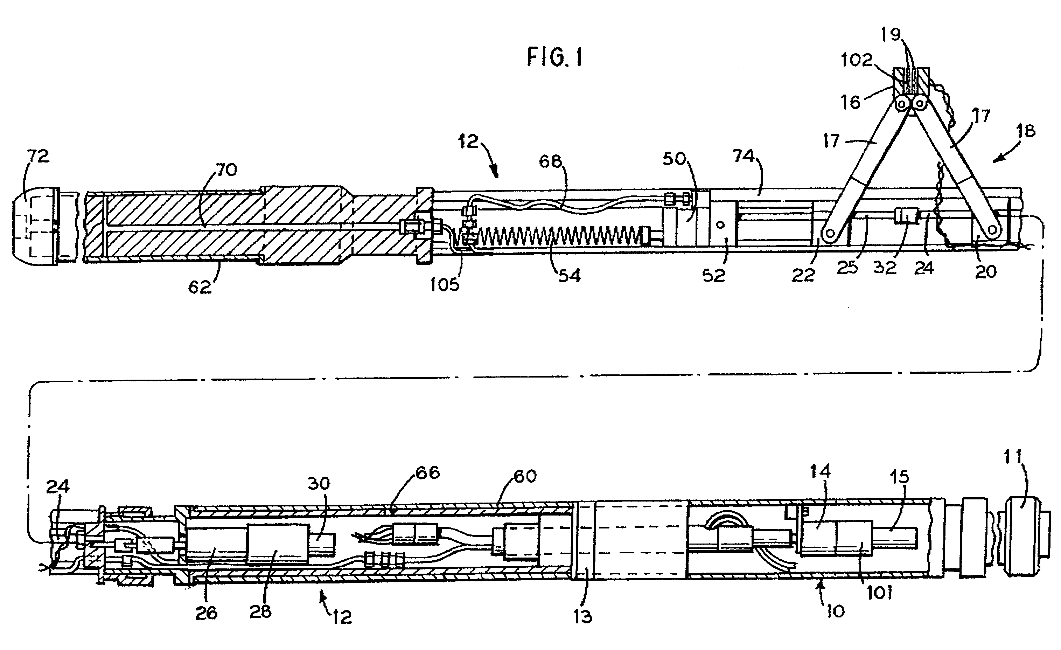

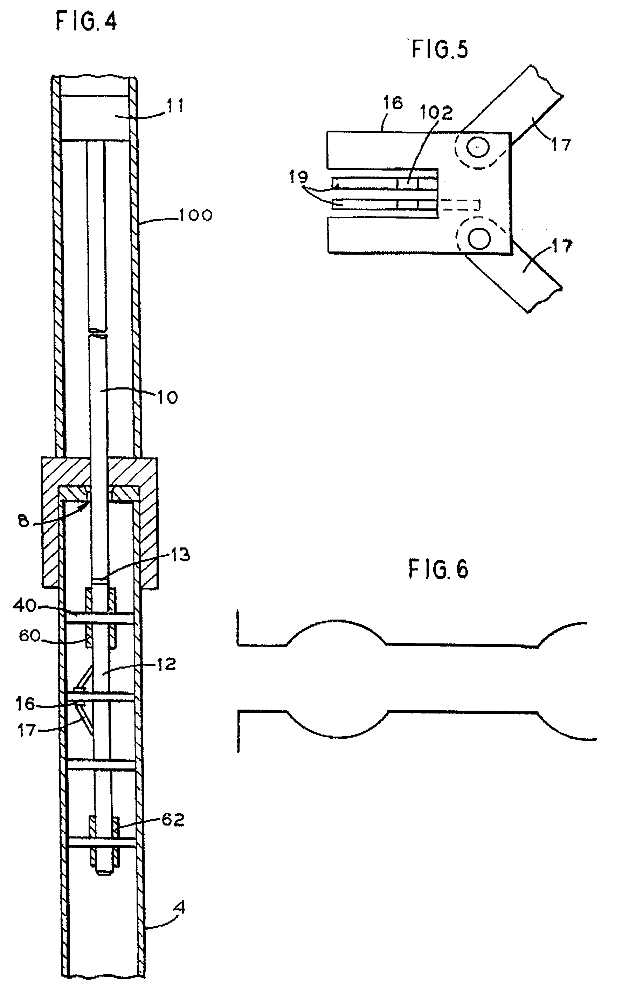

Le dispositif suivant l'invention, tel que représenté en figures 1 et 4, comprend un dispositif d'inspection destiné aux internes supérieurs 4 d'un réacteur nucléaire. Le dispositif comprend un support de sonde supérieur d'aspect allongé et tubulaire, désigné par la référence 10, ayant un ou plusieurs paliers 11 destinés à guider un corps de sonde vers le haut et vers le bas dans le boîtier support externe désigné dans son ensemble par la référence 100. Le boîtier support externe 100 a pour fonction de porter le corps de sonde 12 et le support de sonde 10 et de mettre en place la sonde dans les internes supérieurs. Il permet également de régler la position axiale, à l'aide d'une vis d'entrainement ou d'autres moyens. Le corps de sonde 12 est monté sur l'extrémité inférieure du support de sonde 10 par un palier 13 de façon à pouvoir tourner autour de son axe longitudinal. L'entrainement en rotation est assuré par des moyens d'entrainement en rotation, constitués dans le cas illustré par un moteur 15, un engrenage réducteur 101 et un codeur 14 permettant de connaître à tout moment la position angulaire exacte du corps de sonde.

Un transducteur de profil 16 est relié au corps de sonde 12, de façon à pouvoir se déplacer radialement, sur des moyens d'entrainement de transducteur désignés dans leur ensemble par 18. Le transducteur 16 comprend avantageusement une paire de branches opposées 19 équipées de jauges de contrainte 102, mieux visibles sur la figure 5. Ces jauges peuvent être amenées en contact avec la surface d'un canal, de façon à mesurer le profil du canal lorsque le transducteur se déplace radialement le long du canal. Les moyens 18 d'entrainement de transducteur comprennent une paire de bras 17 ayant chacun une extrémité montée sur le transducteur 16 de façon à pouvoir tourner. L'extrémité opposée est montée sur un bloc suiveur respectif, supérieur ou inférieur, 20, 22 de façon à pouvoir tourner. Les blocs sont montés de façon à pouvoir coulisser verticalement dans le corps de sonde 12. Une vis d'entrainement haute 24 est vissée dans le bloc supérieur 20 et entrainée en rotation par un moteur 30 d'entrainement de transducteur par l'intermédiaire de joints appropriés et d'un train d'engrenages. Une tête d'engrenages 28 relie l'arbre du moteur 30 à un second codeur 26 de façon à fournir une mesure exacte de la position angulaire de l'arbre du moteur, et donc la position radiale du transducteur 16.

Une vis d'entrainement basse 25 est vissée dans le bloc inférieur 22 et couplée à la vis d'entrainement haute 24 par un coupleur en rotation 32. Les filetages des vis d'entrainement 24 et 25 sont de sens contraires de sorte que les blocs 20 et 22 se déplacent dans des directions opposées lorsque les deux vis d'entrainement tournent dans le même sens. Ainsi les blocs avancent ou rétractent radialement le transducteur 16.

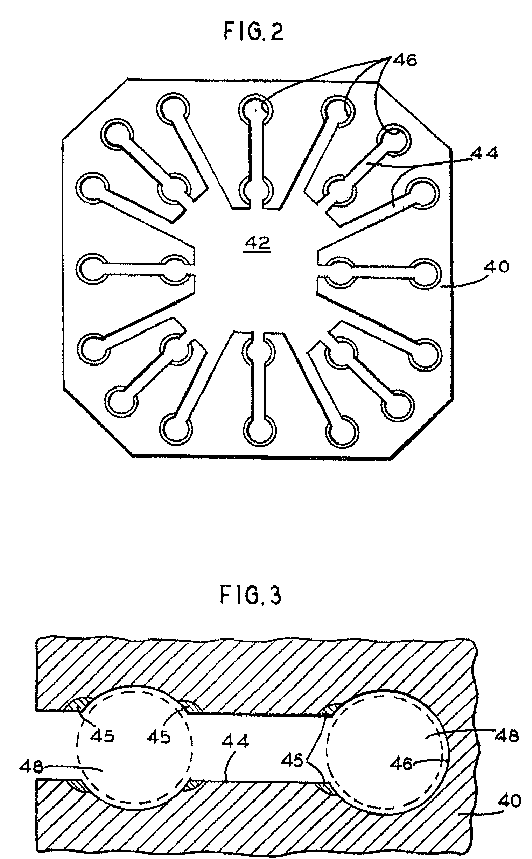

Référence sera maintenant faite aux figures 2 et 4, qui montrent un environnement possible de l'invention, avant de décrire davantage le dispositif d'inspection de la figure 1.

Les internes supérieurs d'un réacteur nucléaire comportent une structure verticale d'environ quatorze pieds (environ 4,30 m) de haut ayant au sommet une ouverture centrale 8 de petite dimension. La structure comporte des plaques de support horizontales ayant une ouverture centrale 42 et plusieurs (seize dans le cas représenté) canaux radiaux 44 s'étendant vers l'extérieur à partir de l'ouverture centrale 42. Chaque canal radial 44 communique avec une ou plusieurs ouvertures verticales 46 destinées à recevoir les crayons de commande 48 montrés en figure 3. Sur cette figure 3, la zone hachurée 45 de communication entre le canal 44 et l'ouverture 46 est le siège de l'usure la plus probable, provoquée par les vibrations du crayon de commande. Cette zone est celle qu'il est le plus important de surveiller à l'aide du dispositif suivant l'invention.

Lors de la mise en oeuvre, le boîtier support externe 100 descend le corps de sonde 12 verticalement à travers l'ouverture centrale 42 de façon à aligner le transducteur 16 avec les plaques de support 40 et les canaux 44. Le moteur 15 est alors alimenté et sa position angulaire est surveillée à l'aide du codeur 14 de façon à amener le transducteur 16 dans l'orientation convenable pour accéder à l'un des canaux 44. Le moteur 30, contrôlé à l'aide du codeur 26, est alors alimenté pour déplacer radialement le transducteur 16 vers l'extérieur du corps de sonde 12. Le transducteur mesure le profil du canal 44 et en particulier les zones d'usure. Les codeurs, moteurs et transducteur sont reliés à l'organe de calcul (non représenté) permettant de mettre en place automatiquement ou manuellement le transducteur et de le déplacer tout en faisant l'acquisition des données de chaque profil de canal. Un enregistrement de profil représentatif obtenu au moyen du dispositif d'inspection est montré en figure 6.

Des jauges de contrainte ont été représentées et mentionnées, mais on peut utiliser tout autre transducteur ou capteur pour mesurer le profil de canal, par exemple des transducteurs ultrasoniques sans contact.

La figure 1 montre un ressort 54 monté entre un ensemble éjecteur 52 et le corps de sonde 12. En cas de panne du dispositif d'entrainement de sonde alors que les bras 17 sont déployés, on peut rapidement rétracter le transducteur 16 dans le corps de sonde 12 en désactivant un vérin pneumatique 50, ce qui libère l'ensemble éjecteur 52 qui est déplacé vers le bas par la contraction du ressort 54. La libération de l'ensemble éjecteur 52 amène le coupleur 32 à séparer les vis d'entrainement 24 et 25, de façon à rétracter le transducteur 16. Cette mesure additionnelle permet de récupérer la sonde en cas de panne du mécanisme d'entrainement, sans dommage à la sonde ou aux internes supérieurs du réacteur nucléaire.

Le corps de sonde 12 est avantageusement centré dans l'ouverture centrale 42 par une membrane haute 60 et une membrane basse 62 qui sont l'une et l'autre autour du corps de sonde 12. On peut gonfler la membrane 60 en admettant de l'air ou un autre fluide pneumatique dans l'intérieur creux supérieur du corps de sonde 12. L'air arrive au conduit 66 pour gonfler la membrane 60 et la dilater vers l'extérieur de façon à centrer la partie supérieure de la sonde par rapport à la paroi interne de l'ouverture centrale 42. De même, une tubulure 105 peut être prévue pour alimenter, en air ou en un autre fluide pneumatique, un conduit en T dans la partie basse du corps de sonde 12, pour gonfler la membrane basse 62. La conduite 68 fournit l'air de maintien au vérin pneumatique 50 de façon qu'une perte de pression dans le corps de sonde 12 provoque la rétraction du transducteur 16.

Un bouchon terminal 72 présente une surface externe arrondie pour faciliter l'introduction du dispositif d'inspection dans les internes supérieurs.

Le corps de sonde 12 est fixé de façon étanche au-dessus et au-dessous de la zone du transducteur 16. Le corps de sonde 12 est cylindrique avec une fente longitudinale 74 permettant au transducteur 16 et aux bras 17 de se déployer et de se rétracter radialement. Le corps de sonde 12 est ainsi étanche dans toute ses parties, sauf dans la zone du transducteur 16.

L'invention ne se limite pas au mode particulier de réalisation qui a été représenté et décrit et il doit être entendu que la portée du présent brevet s'étend à tout le domaine des revendications ci-après.

## Revendications

1. Dispositif d'inspection des internes supérieurs d'un réacteur nucléaire ayant une plaque support présentant une ouverture centrale (42), plusieurs canaux radiaux (44) s'étendant vers l'extérieur à partir de l'ouverture centrale, et au moins une ouverture (46) de crayon de commande communiquant avec chaque canal, ledit dispositif comprenant :
- un boîtier support externe (100) permettant de déplacer vers le haut et vers le bas un corps de sonde (12) à travers l'ouverture centrale ;
- un support de sonde (10) porté par le corps de sonde (12) ;
- des moyens d'entrainement en rotation reliés au support de sonde ;
- un transducteur de profil (16) destiné à détecter le profil d'un canal radial dans la plaque support ; et
- des moyens (18) d'entrainement de transducteur reliés au corps de sonde (12) pour centrer le corps de sonde dans l'ouverture centrale, de sorte que, une fois le corps de sonde abaissé par le boîtier support externe (100) dans l'ouverture centrale, les moyens d'entrainement en rotation soient commandables de façon à faire tourner le corps de sonde pour l'amener dans une orientation permettant de déplacer le transducteur radialement dans l'un des canaux radiaux tandis que les moyens d'entrainement (18) de transducteurs puissent être mis en oeuvre pour déplacer radialement le transducteur le long du canal et vers une zone de communication entre le canal et une ouverture (46) de crayons de commande.

2. Dispositif selon la revendication 1, caractérisé en ce qu'il comprend des moyens de centrage ayant une membrane gonflable haute (60) reliée au corps de sonde (12) au-dessus du transducteur et une membrane gonflable basse (62) reliée au corps de sonde (12) au-dessous du transducteur.

3. Dispositif selon la revendication 1 ou 2, caractérisé en ce que les moyens d'entrainement de transducteur comprennent une paire de blocs suiveurs (20,22) montés sur le corps de sonde de façon à pouvoir coulisser, des moyens d'entrainement à vis vissés dans les blocs de façon à pouvoir tourner et à déplacer les blocs le long du corps de sonde, et au moins un bras de transducteur (17) monté de façon à pouvoir pivoter entre le transducteur et chacun des blocs, de façon que l'écartement relatif des blocs provoque une rétraction radiale du transducteur vers le corps de sonde et que le rapprochement des blocs provoque le déplacement radial vers l'extérieur du transducteur à partir du corps de sonde.

4. Dispositif selon la revendication 1, 2 ou 3, caractérisé par des moyens de codage (14) reliés aux moyens d'entrainement en rotation et aux moyens d'entrainement de transducteur de façon à fournir une mesure de position angulaire et de position radiale du transducteur.

5. Dispositif suivant l'une quelconque des revendications précédentes, caractérisé en ce qu'il comprend également des moyens de rétraction d'urgence (52,54) reliés au transducteur et destinés à rétracter le transducteur radialement vers le corps de sonde quelle que soit la position donnée au transducteur par les moyens d'entrainement de transducteur.
